(19) Europäisches Patentamt
European Patent Office
Office européen des brevets

(11) **EP 3 765 818 B1**

(12) **FASCICULE DE BREVET EUROPEEN**

(45) Date de publication et mention de la délivrance du brevet:
**04.09.2024 Bulletin 2024/36**

(21) Numéro de dépôt: **19718422.9**

(22) Date de dépôt: **15.03.2019**

(51) Classification Internationale des Brevets (IPC):
**G01C 21/16** *(2006.01)* **G01C 19/00** *(2013.01)*
**G01C 22/02** *(2006.01)* **G01C 25/00** *(2006.01)*

(52) Classification Coopérative des Brevets (CPC):
**G01C 25/005; G01C 19/00; G01C 21/165; G01C 22/025**

(86) Numéro de dépôt international:
**PCT/FR2019/050588**

(87) Numéro de publication internationale:
**WO 2019/175516 (19.09.2019 Gazette 2019/38)**

(54) **PROCÉDÉ DE CALIBRATION D'UN GYROMÈTRE ÉQUIPANT UN VÉHICULE**

VERFAHREN ZUR KALIBRIERUNG EINES IN EINEM FAHRZEUG EINGEBAUTEN GYROMETERS

METHOD OF CALIBRATING A GYROMETER INSTALLED IN A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.03.2018 FR 1852230**

(43) Date de publication de la demande:
**20.01.2021 Bulletin 2021/03**

(73) Titulaire: **SYSNAV**
**27200 Vernon (FR)**

(72) Inventeurs:
• **VISSIERE, David**
**75009 Paris (FR)**
• **HILLION, Mathieu**
**27200 Vernon (FR)**
• **MEIER, Hendrik**
**27200 Vernon (FR)**
• **DUGARD, Jean-Philippe**
**27200 Vernon (FR)**

(74) Mandataire: **Regimbeau**
**20, rue de Chazelles**
**75847 Paris Cedex 17 (FR)**

(56) Documents cités:
EP-A2- 1 094 299    EP-A2- 1 094 299
JP-A- 2006 199 242    JP-A- 2006 199 242
JP-A- H1 123 606    JP-A- H1 123 606

US-A1- 2013 110 391    US-A1- 2013 110 391

• "Calibration", 6 February 2018 (2018-02-06), XP002786165, Retrieved from the Internet <URL:https://en.wikipedia.org/w/index.php?title=Calibration&oldid=824261899> [retrieved on 20181030]
• MINITAB BLOG EDITOR: "How to Interpret a Regression Model with Low R-squared and Low P values", 12 June 2014 (2014-06-12), XP002792433, Retrieved from the Internet <URL:https://blog.minitab.com/blog/adventures-in-statistics-2/how-to-interpret-a-regression-model-with-low-r-squared-and-low-p-values> [retrieved on 20190626]
• LGC STANDARDS: "Preparation of Calibration Curves - A Guide to Best Practice", 1 September 2003 (2003-09-01), XP055487209, Retrieved from the Internet <URL:https://www.lgcgroup.com/LGCGroup/media/PDFs/Our%20science/NMI%20landing%20page/Publications%20and%20resources/Guides/Calibration-curve-guide.pdf> [retrieved on 20180622]
• "Calibration", 6 February 2018 (2018-02-06), XP002786165, Retrieved from the Internet <URL:https://en.wikipedia.org/w/index.php?title=Calibration&oldid=824261899> [retrieved on 20181030]

- **MINITAB BLOG EDITOR: "How to Interpret a Regression Model with Low R-squared and Low P values", 12 June 2014 (2014-06-12), XP002792433, Retrieved from the Internet <URL:https://blog.minitab.com/blog/adventures-in-statistics-2/how-to-interpret-a-regression-model-with-low-r-squared-and-low-p-values> [retrieved on 20190626]**

**Description**

DOMAINE TECHNIQUE GENERAL

La présente invention concerne le domaine de la navigation sans GNSS.

Plus précisément, elle concerne un procédé de calibration d'un gyromètre équipant un véhicule muni d'odomètres.

ETAT DE L'ART

Il est aujourd'hui commun de suivre la position d'un véhicule par GNSS (Global Navigation Satellite System, par exemple le GPS) ou en utilisant un réseau de communication (triangulation à l'aide de bornes émettrices, réseau wifi ou autres).

Ces méthodes s'avèrent très limitées car elles ne fonctionnent pas en intérieur, dans les tunnels, ou trop loin des émetteurs, et s'avèrent dépendantes de technologies extérieures comme les satellites pour le GNSS qui peuvent être indisponibles voire volontairement brouillées.

Alternativement, on connait aussi des méthodes « autonomes » pour suivre dans n'importe quel environnement le déplacement relatif d'un véhicule grâce à une centrale inertielle ou magnéto-inertielle. Par déplacement relatif, on entend la trajectoire du véhicule dans l'espace par rapport à un point et à un repère donnés à l'initialisation. En plus de la trajectoire, ces méthodes permettent également d'obtenir l'orientation du véhicule par rapport au même repère initial.

Une centrale inertielle est constituée au minimum de trois accéléromètres et de trois gyromètres disposés en triaxe. Typiquement, les gyromètres « maintiennent » un repère, dans lequel une double intégration temporelle des mesures des accéléromètres permet d'estimer le mouvement.

Il est notablement connu que pour pouvoir utiliser les méthodes de navigation inertielle classique, telles que mises en oeuvre dans les applications lourdes comme la navigation des avions de chasse ou de ligne, des sous-marins, des navires, etc., il est nécessaire d'utiliser des capteurs de très haute précision. En effet la seule double intégration temporelle d'une mesure d'accélération fait qu'une erreur constante d'accélération crée une erreur de position qui augmente de façon proportionnelle au carré du temps.

L'odométrie est une technique alternative permettant d'estimer la position d'un véhicule à roues en mouvement à partir de la mesure individuelle des déplacements de ses roues.

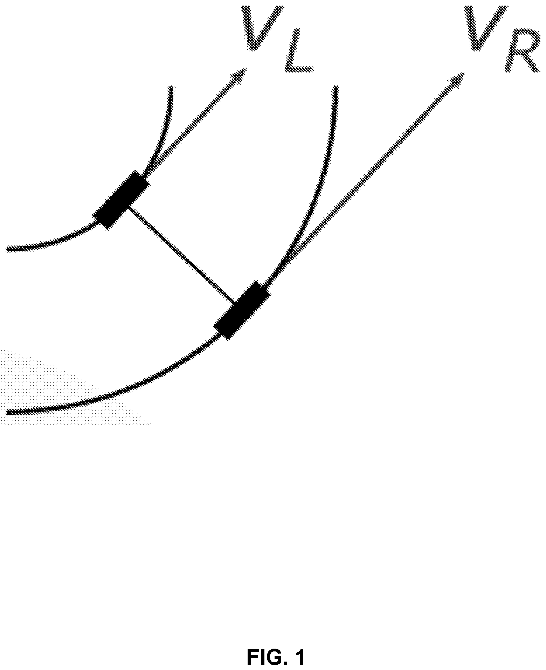

De façon classique, en référence à la **figure 1** on mesure grâce à des odomètres l'abscisse curviligne et la fréquence de rotation de deux roues (par exemple les roues arrière gauche et droite), on en déduit les vitesses respectives $v_L$ et $v_R$ correspondantes (en fonction du diamètre des roues), et par « odométrie différentielle » on obtient la vitesse « globale » $v$ (i.e. la vitesse du centre de l'axe reliant les deux roues 10a, 10b) et la vitesse angulaire $\omega$ du véhicule via les équations :

$$\begin{cases} v = \frac{v_L + v_R}{2} \\ \omega = \frac{v_R - v_L}{d} \end{cases},$$

avec d la distance entre les roues.

L'odométrie différentielle apporte satisfaction, le brevet US8965691 propose par exemple une version généralisée sur n roues utilisée pour suivre le mouvement d'un véhicule comme alternative au GNSS ou à une centrale inertielle lors de petits déplacements à faible vitesse (lesquels ne sont pas proprement détectables par le GNSS), par exemple lors de manoeuvres pour se garer.

Cependant, l'odométrie différentielle s'avère très susceptible d'introduire des erreurs et ne peut pas être utilisée seule en remplacement total du GNSS.

En effet, pour qu'elle soit fiable, il faut qu'il n'y ait pas le moindre dérapage, que les deux roues considérées soient parfaitement parallèles, et que les paramètres comme la distance entre les roues ou leur diamètre soient constants et connus avec précision. De surcroit, à faible vitesse, le résultat de vitesse d'un odomètre comptant des « tops » (voir plus bas) perd en précision ce qui dégrade d'autant plus le résultat de vitesse angulaire issu de l'odométrie différentielle.

Et surtout, l'odométrie différentielle donne la vitesse angulaire autour de l'axe vertical par rapport au véhicule au lieu de la route. Ceci seul ne permet le calcul du cap qu'à condition que la route soit horizontale.

Par conséquent, il a été proposé d'utiliser en combinaison avec les odomètres un gyromètre, voire une centrale inertielle complète.

Une première approche est d'utiliser le gyromètre/la centrale inertielle (ou une autre référence) pour calibrer les odomètres. On connait notamment à ce titre la demande de brevet US2012/0022780, qui discute les défauts de l'odométrie avec un modèle d'erreur.

Cette méthode s'avère lourde et ne résout que partiellement le problème.

Alternativement, US2009/0265054 propose d'utiliser un gyromètre pour déterminer le cap, et l'odométrie différentielle (ainsi que d'autres signaux comme l'angle du volant) pour identifier une trajectoire suivant une ligne droite afin de débiaiser le gyromètre. En termes des équations données en haut, ce procédé correspond à regarder si $v_R = v_L$ (ou, en pratique, si leur différence est inférieure à un seuil donné). Pour le cas de $v_R \neq v_L$ dans une situation de vitesse angulaire non-nulle (ou dépassant le seuil donné pour identifier une trajectoire suivant une ligne droite), le procédé de US2009/0265054 ne prévoit ni traitement quantitatif ni utilisation de la vitesse odométrique.

Une telle méthode est simple et efficace, mais s'avère contraignante, puisqu'elle est dépendante des lignes droites. De surcroit, il n'est en pratique pas suffisant que la trajectoire soit en ligne droite, il faut aussi qu'elle ne soit pas accélérée trop fortement, et la ligne droite sans accélération ne permet que d'identifier le biais du gyromètre, et non le facteur d'échelle.

Enfin, EP 1 094 299 propose d'utiliser les systèmes ABS et TCS d'un véhicule pour réduire la dérive et augmenter la précision du facteur d'échelle d'un gyroscope équipant ce véhicule.

Il serait souhaitable de disposer d'une nouvelle méthode de calibration d'un gyromètre d'un véhicule en vue de l'estimation du mouvement du véhicule qui permette une excellente qualité de résultat et ne soit pas contraignante.

PRESENTATION DE L'INVENTION

La présente invention se rapporte ainsi selon un premier aspect à un procédé selon la revendication 1.

Selon d'autres caractéristiques avantageuses et non limitatives :

- la première vitesse angulaire estimée $\omega_{gyro}^{(estimation)}$ du véhicule est liée à la vitesse angulaire mesurée $\omega_{gyro}^{(mesure)}$ par un modèle $\omega_{gyro}^{(estimation)} = D \cdot \left( \omega_{gyro}^{(mesure)} + b \right)$, où $D$ et $b$ sont les paramètres de calibration du gyromètre ;
- l'étape (b) comprend la mise en oeuvre d'un filtre récursif ou d'une optimisation ;
- les moyens de mesure consistent soit en au moins deux odomètres (20a, 20b), soit en un capteur d'angle de volant ;
- les moyens de mesure consistent en au moins deux odomètres, le véhicule présentant au moins deux roues munies d'odomètres, lesdites grandeurs représentatives de la vitesse angulaire du véhicule étant les vitesses desdites roues, et ladite deuxième vitesse angulaire estimée du véhicule étant fonction des vitesses mesurées des roues et de paramètres de calibration des odomètres ;
- l'étape (b) comprend également la détermination de valeurs d'au moins un paramètre de calibration des odomètres ;
- les deux roues arrière du véhicule sont munies d'odomètres, la deuxième vitesse angulaire estimée $\omega_{odo}^{(estimation)}$ du véhicule étant liée aux vitesses mesurées $v_L$, $v_R$ respectivement pour la roue arrière gauche et la roue arrière droite par la formule $\omega_{odo}^{(estimation)} = \frac{\alpha_R v_R - \alpha_L v_L}{d}$, où $\alpha_R$, $\alpha_L$ et $d$ sont les paramètres de calibration des odomètres ;
- les paramètres de calibration $D$ et $d$ sont prédéterminés, l'étape (b) comprenant la détermination des paramètres de calibration $b$, $\alpha_R$ et $\alpha_L$ ;
l'étape (b) comprend la minimisation de $\left| \omega_{odo}^{(estimation)} - \omega_{gyro}^{(estimation)} \right|$ ;
- le procédé comprend une étape (d) d'estimation par les moyens de traitement de données du mouvement dudit véhicule en fonction de la vitesse angulaire mesurée du véhicule et/ou des vitesses mesurées desdites roues, et des valeurs des paramètres de calibration, dans lequel une orientation du véhicule est estimée à l'étape (d) uniquement en fonction de la vitesse angulaire mesurée du véhicule et des valeurs des paramètres de calibration, et les vitesses mesurées desdites roues sont utilisées pour estimer une vitesse globale du véhicule.

Selon un deuxième aspect, est proposé un véhicule à roues selon la revendication 11.

Selon un troisième et un quatrième aspect, sont proposés un produit programme d'ordinateur comprenant des instructions de code pour l'exécution d'un procédé selon le premier aspect de l'invention de calibration d'un gyromètre ; et un moyen de stockage lisible par un équipement informatique sur lequel un produit programme d'ordinateur comprend des instructions de code pour l'exécution d'un procédé selon le premier aspect de calibration d'un gyromètre.

PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

- la figure 1 est un schéma illustrant l'odométrie différentielle ;
- la figure 2 représente un exemple d'architecture de véhicule pour la mise en oeuvre du procédé selon l'invention.

DESCRIPTION DETAILLEE

*Architecture*

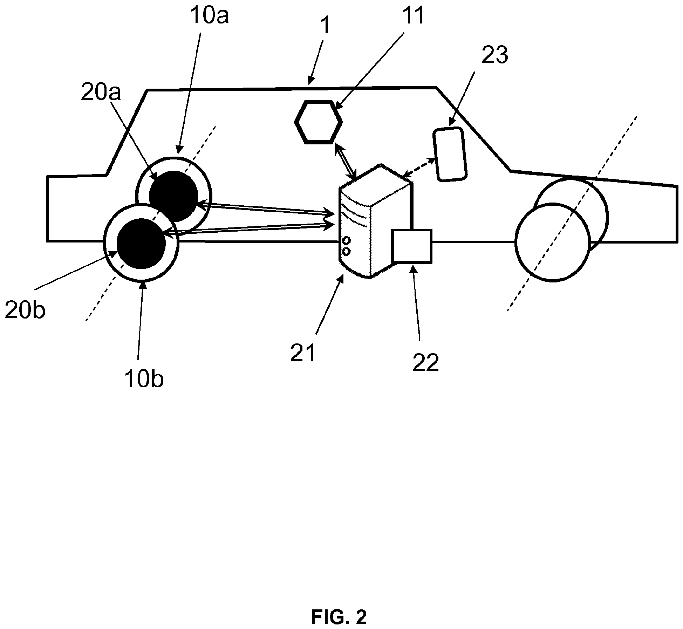

En référence à la **figure 2**, le présent procédé permet la calibration d'un gyromètre 11 (i.e. des moyens de mesure inertielle apte à mesurer une vitesse angulaire du véhicule 1) équipant un véhicule 1. Le véhicule et en outre équipé de moyens de mesure 20 d'au moins une autre grandeur représentative de la vitesse angulaire du véhicule 1.

On comprend que les moyens 20 peuvent être tout capteur solidaire du véhicule 1 autre qu'un gyromètre permettant d'obtenir indirectement une vitesse angulaire. Lesdits moyens de mesure 20 consistent ainsi avantageusement en un capteur angulaire de volant (ladite au moins une grandeur représentative d'une vitesse angulaire du véhicule 1 est l'angle du volant par rapport à une position de référence dans laquelle le véhicule 1 roule en ligne droite), et/ou en au moins deux odomètres 20a, 20b, i.e. le véhicule 1 présente au moins deux roues 10a, 10b chacune munie d'un d'odomètre 20a, 20b (les grandeurs représentatives d'une vitesse angulaire du véhicule 1 sont les vitesses de chacune des roues 10a, 10b munie d'un odomètre 20a, 20b). Plus précisément, dans ce mode de réalisation préféré dit « odométrique » qui sera décrit en particulier dans la suite de la présente description, le véhicule 1 comprend un gyromètre 11 et au moins deux odomètres 20a, 20b chacun pour une roue 10a, 10b du véhicule 1. Naturellement, des roues du véhicule 1 peuvent ne pas être équipées d'odomètres 20a, 20b.

Dans l'exemple de la figure 2, qui représente un véhicule 1 classique à quatre roues de type voiture, les deux roues arrière 10a, 10b du véhicule 1 sont munies d'odomètres 20a, 20b (respectivement pour la roue arrière gauche 10a, et la roue arrière droite) et les deux roues avant n'en sont pas munies. Il s'agit d'une configuration avantageuse car les roues arrière ne tournent pas autour d'un axe vertical comme les roues avant, i.e. restent parfaitement parallèles et d'une distance constante. De surcroit, dans le cas le plus courant d'un véhicule traction avant, les roues arrière sont non-motrices, et dérapent donc moins.

Cependant on comprendra qu'on peut prendre alternativement les deux roues avant (cet exemple sera également décrit, comme l'on verra les roues avant ne sont plus exactement parallèles l'une par rapport à l'autre lorsque l'on tourne le volant, mais il est possible d'en calculer l'impact), ou une roue avant et une roue arrière, voire trois ou quatre roues. De façon générale, l'homme du métier saura utiliser la géométrie directionnelle d'Ackermann à cet effet.

A noter que le véhicule 1 n'est pas forcément une voiture et peut être tout véhicule à n'importe quel nombre de roues (y compris plus de quatre comme dans un camion).

Par odomètre en entend un équipement capable de mesurer la vitesse d'une roue en comptant les tours (« compte-tours ») ou en mesurant l'abscisse curviligne. Généralement, les odomètres présentent une partie fixée à la roue (par exemple un aimant), et détectent chaque passage de cette partie fixée (appelé « top ») de sorte à compter le nombre de tours par unité de temps, qui est la fréquence de rotation. On connait d'autres techniques, par exemple la détection optique d'une marque sur la roue, ou le magnétomètre du brevet FR2939514 qui détecte la rotation d'un objet comportant des éléments métalliques.

Ici la « vitesse » d'une roue est un scalaire, i.e. la norme de la vitesse de la roue dans le référentiel terrestre (dans l'hypothèse d'absence de dérapage). Si le rayon r de la roue 10a, 10b est connu, la mesure de la fréquence $f$ de rotation permet d'estimer cette norme de la vitesse : $v=2\pi rf$.

Dans le présent procédé, on comprendra que soit les odomètres 20a, 20b sont directement capables de fournir les vitesses des roues 10a, 10b, soit ils indiquent juste les « tops » et c'est une unité de traitement 21 qui sera décrite plus loin qui en déduit les vitesses.

Le véhicule 1 est en outre équipé du gyromètre 11 (typiquement solidaire de la carrosserie, et de façon générale fixe dans le référentiel du véhicule 1), i.e. des moyens de mesure inertielle apte à mesurer la vitesse angulaire du véhicule 1 selon un système de trois axes orthogonaux, qui définissent le repère véhicule.

La rotation autour d'un axe vertical est décrite par l'angle sur lequel le conducteur agit en tournant le volant. Sur un sol généralement plat, les changements de direction du véhicule sont dans le plan horizontal, i.e. également selon ledit axe vertical.

En réalité, des valeurs non-nulles pour le roulis (rotation selon l'axe longitudinal du véhicule 1) et le tangage (rotation selon l'axe transversal du véhicule 1) peuvent être le résultat par exemple d'une route en pente. Le traitement de ces angles peut devenir important au moment de l'estimation du mouvement ; par contre, la rotation autour de l'axe vertical du véhicule est exactement ce que l'odométrie différentielle fournit comme mesure dans l'idéal.

Ainsi, on notera dans tous les cas que l'estimation du biais du gyromètre 11 selon l'axe vertical du véhicule 1 est principalement exacte (même pour une route qui n'est pas horizontale).

On constate que le mouvement du châssis sur lequel le gyromètre 11 est fixé peut déranger cet axe par rapport à l'axe normal au plan de la route dans le cas d'une accélération longitudinale ou transverse. Cet effet peut être négligeable ou modélisable pour des accélérations suffisamment faibles, ce qui peut être vérifié a posteriori, par exemple, en caractérisant la calibration (voir plus bas).

On notera par commodité $\omega$ la composante verticale du vecteur vitesse angulaire $\vec{\omega}$. Par convention, la vitesse angulaire est positive pour un virage en sens anti-horaire (« tourner à droite ») et négative en sens horaire (« tourner à gauche »).

A noter que le véhicule 1 peut être équipé d'autres gyromètres selon d'autres axes et/ou d'accéléromètres, voire comprendre une centrale à inertie à au moins trois accéléromètres et trois gyromètres disposés en triaxe. Les accéléromètres sont sensibles aux forces extérieures autres que gravitationnelles appliquées sur le capteur, et permettent de mesurer une accélération spécifique notée $\vec{\gamma}$.

Le véhicule 1 comprend en outre comme expliqué des moyens de traitement 21 (typiquement un processeur) pour la mise en oeuvre directement en temps réel des traitements du présent procédé, par exemple un ordinateur de bord du véhicule 1, et éventuellement une mémoire 22, et une interface 23 pour restituer des informations du mouvement du véhicule 1 au conducteur (une valeur de vitesse instantanée, un cap, une position sur une carte, etc.), et/ou envoyer des commandes au véhicule 1. Le véhicule 1 peut à ce titre être notamment un véhicule autonome, et les moyens de traitement 21 configurés pour mettre en oeuvre la navigation autonome du véhicule 1. Ainsi, lesdites commandes sont envoyées aux organes de contrôle du véhicule (moteur, actionneurs du volant, etc.) de sorte à simuler la conduite par le conducteur.

Le gyromètre 11 et les moyens de mesure 20 (préférentiellement les odomètres 20a, 20b) sont connectés aux moyens de traitement de données 21 en particulier de manière filaire, par exemple via Ethernet.

Le véhicule 1 peut éventuellement comprendre des capteurs complémentaires comme un récepteur GNSS, etc.

*Procédé*

Le présent procédé est un procédé de calibration d'au moins le gyromètre 11. Par calibration, on entend la détermination d'un ou plusieurs paramètres de calibration, dont on verra une liste plus loin. En particulier, certains paramètres de calibrations peuvent être considérés fiables, et prédéterminés. En ce qui concerne ceux à déterminer, on peut prévoir qu'ils présentent des valeurs « actuelles », et que ces valeurs vont le cas échéant être modifiées.

Dans un mode de réalisation particulièrement préféré, le procédé peut en outre être un procédé de calibration des moyens de mesure 20 (les odomètres 20a, 20b), i.e. le gyromètre 11 et les odomètres 20a, 20b peuvent être calibrés simultanément. Il s'agit d'un mode extrêmement avantageux, puisque comme l'on verra il n'y a même plus besoin de supposer que la mesure des moyens 20 (l'odométrie) est bien calibrée pour l'utiliser comme référence pour calibrer la gyrométrie : les deux se calibrent automatiquement l'une l'autre. Alternativement, il sera bien entendu possible de considérer les moyens de mesure 20 (les odomètres 20a, 20b) comme bien calibrés et de calibrer le gyromètre 11 en conséquence, ce qui permet par exemple de calibrer plus de paramètres du gyromètre 11.

Comme on le verra plus tard, dans un mode de réalisation avantageux le présent procédé est même un procédé d'estimation du mouvement du véhicule 1, i.e. il comprend suite à la calibration l'utilisation des mesures pour en déduire de façon fiable une ou plusieurs composantes du mouvement.

Le présent procédé fonctionne dans le cas de trajectoire droite sans accélération forte (proposée dans le document US 2009/265054), mais également dans le cas de trajectoires avec virages et accélérations variées.

Dans une première étape (a), le procédé comprend l'acquisition par le gyromètre 11 d'une vitesse angulaire mesurée du véhicule 1, notée $\omega_{gyro}^{(mesure)}$, et par les moyens de mesure 20 de valeurs dites mesurées de l'au moins une grandeur représentative de la vitesse angulaire du véhicule 1. Dans le mode de réalisation odométrique, l'étape (a) comprend plus précisément l'acquisition par les odomètres 20a, 20b, de vitesses mesurées desdites roues 10a, 10b. Dans l'exemple préféré d'une roue gauche 10a et d'une roue droite 10b, ces vitesses sont notées $v_L$ et $v_R$.

Ces grandeurs sont avantageusement mesurées avec un échantillonnage dt (i.e. toutes les « dt » secondes) avec dt très petit devant le temps caractéristique des mouvements du véhicule 1, typiquement 40 ms.

Ici, par « vitesse angulaire du véhicule 1 », on entend comme expliqué au moins celle autour de son axe vertical, mais on pourra également considérer celles selon d'autres axes.

Dans une étape (b), les moyens de traitement de données 21 déterminent les valeurs d'au moins un paramètre de calibration du gyromètre 11 minimisant un écart entre une première deuxième vitesse angulaire estimée du véhicule

1 et une deuxième vitesses angulaire estimée du véhicule 1.

L'idée est d'estimer de façons différentes, en particulier en utilisant des données différentes, la vitesse angulaire. Idéalement, les deux estimations coïncident, sinon c'est que les capteurs sont à recalibrer.

De façon générale, l'étape (b) est mise en oeuvre de façon récurrente pour recalibrer régulièrement le gyromètre 11.

La première vitesse angulaire estimée du véhicule 1, notée $\omega_{gyro}^{(estimation)}$, est issue de la gyrométrie. Elle est fonction de la vitesse angulaire mesurée et de paramètres de calibration du gyromètre 11. De façon préférée, elle est liée à la vitesse angulaire mesuré $\omega_{gyro}^{(mesure)}$ par la formule $\omega_{gyro}^{(estimation)} = D \cdot (\omega_{gyro}^{(mesure)} + b)$, où $D$ et $b$ sont les paramètres de calibration du gyromètre 11. Plus précisément, $D$ est un facteur d'échelle et b un biais. L'homme du métier saura d'ailleurs corriger, si besoin pour la précision souhaité, l'impact de la rotation terrestre sur $\omega_{gyro}^{(mesure)}$, qui dépend de la latitude.

Dans le cas d'une attitude tridimensionnelle, $D$ est une matrice 3x3 générale = (matrice orthogonale de passage au bon repère) $\times$ (matrice triangulaire supérieure contenant les facteurs d'échelle et les calages). Dans la mesure où $\omega$ ne décrit présentement que la rotation autour de l'axe vertical du véhicule 1, on peut se contenter de ne formuler les équations explicitement que pour ce cas. De façon préférée, on considère que $D$ est prédéterminé (il varie en pratique très lentement) et que le seul paramètre de calibration à déterminer pour le gyromètre 11 est b, qui a effectivement tendance à varier dans le temps (on parle de dérive du gyromètre 11).

A noter que plus généralement, on peut regarder un modèle d'erreur générale : $\omega_{gyro}^{(estimation)} = g(\omega_{gyro}^{(mesure)})$ avec $g$ une fonction (application) qui n'est pas nécessairement affine.

La deuxième vitesse angulaire estimée du véhicule 1, notée $\omega_{odo}^{(estimation)}$ est issue de l'autre type de mesure, en particulier l'odométrie. Dans le mode de réalisation odométrique, elle est fonction des vitesses mesurées des roues 10a, 10b et de paramètres de calibration des odomètres 20a, 20b et, possiblement, des paramètres géométriques du véhicule qui ne font pas partie des paramètres de calibration. Les paramètres de calibration des odomètres sont des paramètres physiques du véhicule 1. Comme expliqué, dans le mode de réalisation préféré où l'on travaille sur les roues arrières du véhicule 1, la deuxième vitesse angulaire estimée $\omega_{odo}^{(estimation)}$ du véhicule 1 est liée aux vitesses mesurées $v_L$, $v_R$ respectivement pour la roue arrière gauche 10a et la roue arrière droite 10b par une formule du type $\omega_{odo}^{(estimation)} = \frac{v_R - v_L}{d}$, avec d la distance entre les roues 10a, 10b. Si l'on prend par exemple les deux roues avant, on peut utiliser un système d'équations liant $\omega_{odo}^{(estimation)}$ et $v$ (la norme de la vitesse du véhicule 1)

$$\begin{cases} v_R^2 = (v + \frac{d}{2} \cdot \omega_{odo}^{(estimation)})^2 + (a \cdot \omega_{odo}^{(estimation)})^2 \\ v_L^2 = (v - \frac{d}{2} \cdot \omega_{odo}^{(estimation)})^2 + (a \cdot \omega_{odo}^{(estimation)})^2 \end{cases}$$

du type , avec $a$ la distance entre l'axe avant et l'axe arrière du véhicule, d'après la géométrie directionnelle d'Ackermann. De façon préféré, dans la suite de la présente description on restera sur le cas d'odomètres 20a, 20b sur les roues arrière qui est plus simple.

A noter qu'il peut y avoir des odomètres supplémentaires dont les mesures ne sont pas prises en compte à ce stade. Par exemple trois roues peuvent être munies d'odomètres, et les mesures de deux seulement utilisées dans l'étape (b), les mesures de l'odomètre de la troisième roue pouvant être utilisées séparément, voir plus loin.

Pour prendre en compte les défauts de ce modèle, on peut rajouter des paramètres de calibrations caractérisant les rayons « effectifs » des roues 10a, 10b (qui varient en fonction de température, âge, pression etc.), en les pondérant avec des coefficients de l'ordre de 1, i.e. on remplace dans la formule $v_R$ par $\alpha_R v_R$ et $v_L$ par $\alpha_L v_L$. Si plus de deux roues sont utilisées, on ajoute autant de coefficients $\alpha$.

La formule de la deuxième vitesse angulaire estimée (dans le cas des roues arrière) devient alors : $\omega_{odo}^{(estimation)} = \frac{\alpha_R v_R - \alpha_L v_L}{d}$, où $\alpha_R$, $\alpha_L$ et d sont les paramètres de calibration du gyromètre 11. A nouveau, on peut supposer que la distance $d$ est prédéterminée (elle varie en pratique très lentement) et que les seuls paramètres de calibration à déterminer pour les odomètres sont $\alpha_R$ et $\alpha_L$.

Ainsi, dans le mode de réalisation particulièrement préféré de double calibration simultanée, il n'y a que trois paramètres de calibration à déterminer : $\alpha_R$, $\alpha_L$ et *b*. Ce nombre restreint de paramètres rend possible une telle double calibration dès lors que le véhicule 1 présente une trajectoire « variée » (directions / vitesses qui varient en fonction du temps). Ceci est utile en particulier au cas des déformations et défauts des pneus en fonction des vitesses et/ou accélérations élevées, cf. US4788645.

Avantageusement, l'objet minimisé dans l'étape (b) est l'écart $\left| \omega_{odo}^{(estimation)} - \omega_{gyro}^{(estimation)} \right|$, qui se traduit dans le modèle préféré par $\left| \frac{\alpha_R v_R - \alpha_L v_L}{d} - D \cdot (\omega_{gyro}^{(mesure)} + b) \right|$. La minimisation de cette expression donnera les paramètres sans ambiguïté pour une trajectoire générique. On comprendra cependant qu'alternativement l'homme du métier pourra utiliser toute autre fonctionnelle sensible à des écarts entre $\omega_{odo}^{(estimation)}$ et $\omega_{gyro}^{(estimation)}$ (norme $L^2$, $L^\infty$, etc...)

Pour mettre en oeuvre cette minimisation, les moyens de traitement de données 21 peuvent travailler au cours du temps sur un intervalle d'une longueur donnée. A ce titre, de façon connue un filtre récursif (méthodes RLS, recursive least squares, etc.) ou une optimisation (méthode aux moindres carrés, etc.) peut être utilisé.

*Caractérisation d'erreur*

Le procédé comprend en outre une étape (c) d'estimation d'un paramètre représentatif d'une erreur sur les paramètres de calibration (du gyromètre 11). L'étape (c) est préférentiellement mise en oeuvre après chaque occurrence de l'étape (b).

L'idée est d'estimer la qualité de l'information fournie par les moyens de mesure 20 pour écarter des cas peu favorables à la calibration, i.e. dans lesquelles les données issues des moyens 20 ne sont pas fiables, comme des cas de dérapage, d'un mouvement trop fort du châssis dû à une accélération trop élevée (p.ex. freinage ou virage fort), ou un défaut important géométrique (p.ex. dégonflement d'un pneu). A ce titre une comparaison dudit paramètre avec un seuil est mise en oeuvre.

Ainsi, si ledit paramètre représentatif d'une erreur est supérieur audit seuil prédéterminé, l'étape (b) ne s'est pas passée sous des conditions favorables et le résultat de la calibration n'est pas accepté. On garde alors les paramètres de l'ancienne calibration comme calibration. On peut par ailleurs rejeter temporairement les mesures des moyens 20 (i.e. les mesures odométriques). En d'autres termes, si ledit paramètre représentatif d'une erreur est inférieur audit seuil prédéterminé, l'étape (c) comprend la calibration effective du gyromètre 11 et, éventuellement, des moyens de mesure 20 de ladite au moins une grandeur représentative de la vitesse angulaire du véhicule 1 avec les valeurs déterminées à l'étape (b) des paramètres de calibration.

A noter que des valeurs déterminées des paramètres de calibrations lors d'une occurrence de l'étape (b), mais non utilisées pour la calibration effective, peuvent être stockées sur les moyens de stockage de données 12, et utilisées, soit lors d'une future occurrence de l'étape (c). Par exemple, on peut prévoir que tant que le paramètre représentatif d'une erreur est au-dessus du seuil, on stocke les paramètres de calibrations déterminés, et lorsqu'on passe en dessous du seuil, la calibration effective tient également compte des valeurs stockées.

On comprend que la caractérisation d'erreur permet d'une certaine façon d'identifier un régime du véhicule 1. Par régime, on entend une caractérisation des mouvements du véhicule 1. Par exemple, on sait d'expérience que les intervalles temporels avec de la dynamique très forte sont typiques de virages très serrés ou de dos d'âne, et de façon générale de situations de dérapage ou de de mouvements de la caisse du véhicule 1 par rapport au châssis dans lesquelles les mesures odométriques sont susceptibles de ne pas être appropriées. Au contraire, des dynamiques moins fortes mais variées (accélérations linéaires et virages qui d'un côté sont suffisamment légers de sorte que l'impact du mouvement du châssis reste négligeable ou modélisable avec une précision suffisante mais qui d'autre côté sont suffisamment prononcés pour faciliter la calibration des facteurs d'échelle et non seulement du biais du gyromètre 11) sont typiques de situations qui fournissent des données « riches ».

Un véhicule peut en pratique être soumis à trois régimes différents :

- Ligne droite sans accélération forte : Le régime exploité dans US20090265054, qui reste favorable à la calibration selon le présent procédé même si ce n'est pas le plus « riche » ;
- Virages (ou accélérations linéaires) forts : Le trajet contient de forts virages dont l'impact sur le véhicule ne permet pas d'obtenir une bonne calibration, et un tel régime entraîne généralement des calibrations rejetées ;

- Virages légers : Le trajet contient des virages qui permettent de calibrer le facteur d'échelle du gyromètre (si l'on le souhaite) mais qui ne sont pas encore trop forts en sorte que les phénomènes mentionnés en haut soient encore négligeables ou au moins modélisables (voir plus loin). C'est ce régime, qui est en pratique le plus courant et le plus « riche », que le présent procédé permet d'exploiter, et que l'étape (c) sélectionne tout particulièrement.

De façon générale, ledit paramètre représentatif d'une erreur sur les paramètres de calibration est fonction d'au moins ladite deuxième vitesse angulaire estimée, calculée pour les valeurs déterminées des paramètres de calibration, et d'une vitesse angulaire « de référence » illustrant un élément de comparaison, qui selon un premier mode de réalisation, non revendiqué, est la valeur de la première vitesse angulaire (la vitesse angulaire gyrométrique).

Ce premier mode de réalisation de l'étape (c) est dit intrinsèque puisqu'il n'utilise que des grandeurs disponibles dans l'étape (b). De façon préférée, on utilise les résidus d'estimation de l'étape (b), i.e. dans le cas odométrique ledit paramètre représentatif d'une erreur est en particulier la norme (p.ex. $L^2$, ou $L^\infty$) de $\omega_{odo}^{(estimation)} - \omega_{gyro}^{(estimation)}$ sur un intervalle de temps donné. Dans un tel cas, l'étape (c) peut être mise en oeuvre de façon concomitante avec l'étape (b). Dans le cas d'un filtre récursif, on peut utiliser la norme (p.ex. $L^2$ ou $L^\infty$) de l'innovation du filtre sur une période de temps donné.

Selon l'invention, dans un deuxième mode de réalisation de l'étape (c), dit extrinsèque, on utilise des grandeurs d'encore un autre type, en particulier :

- l'angle volant si on a utilisé l'odométrie
- l'odométrie si on a utilisé l'angle volant,
- des données GNSS, p.ex. GPS, (si/quand disponibles),
- etc.

L'homme du métier saura calculer sur la base d'une ou l'autre de ces grandeurs une vitesse angulaire de référence, de sorte à la comparer avec la deuxième vitesse angulaire estimée.

A noter que ladite vitesse angulaire théorique peut être obtenue en utilisant les informations odométriques d'éventuelles roues non utilisées à l'étape (b), i.e. l'étape (a) comprend pour au moins une roue supplémentaire munie d'un odomètre, l'acquisition par cet odomètre d'une vitesse mesurée de la roue supplémentaire, de sorte à obtenir une troisième vitesse angulaire estimée $\omega_{odo\prime}^{(estimation)}$ de façon similaire à la deuxième (juste on change de roues à noter qu'une roue utilisée pour la première vitesse angulaire peut être réutilisée pour la troisième vitesse angulaire), et ledit paramètre représentatif d'une erreur sur les paramètres de calibration est alors en particulier la moyenne de $\left| \omega_{odo}^{(estimation)} - \omega_{odo\prime}^{(estimation)} \right|^2$ sur l'intervalle de temps donné.

En complément, on peut recourir à de l'apprentissage pour améliorer l'estimation de ce paramètre d'erreur et/ou développer une approche d'identification du régime favorable de manière plus robuste et avec une disponibilité augmentée.

En particulier, on peut mettre en oeuvre des mécanismes d'apprentissage tels que des réseaux de neurones, machines à vecteurs de support, méthodes des plus proches voisins, forêts d'arbres décisionnels, etc. Ainsi, à chaque occurrence des étapes (b) et (c), on peut venir enrichir une base d'apprentissage dans laquelle chaque ensemble de données de mesures (décrivant le régime du véhicule 1) est « taggué » avec la valeur correspondante du paramètre représentatif d'une erreur, de sorte à progressivement (au fur et à mesure des occurrences successives des étapes (b) et (c)) et automatiquement apprendre à distinguer les calibrations acceptables de celles non acceptables. Ainsi, le calibrage s'améliore de lui-même en permanence.

A noter que dans le cas où l'on dispose de grandeurs d'encore un autre type telles qu'évoquées précédemment, dans un cas où ledit paramètre représentatif d'une erreur est supérieur au seuil (i.e. résultat de la calibration non accepté), on peut au lieu de simplement rejeter les valeurs mesurées par les moyens 20, tenter de modéliser et corriger la perturbation à l'origine de la valeur anormalement élevée du paramètre représentatif d'une erreur. Par exemple :

- les dérapages peuvent être identifiés en utilisant ces données supplémentaires (en particulier issues d'autres odomètres) ;
- Les mouvements de caisse peuvent être estimés et donc compensés (estimateur roulis tangage "classique", voir la thèse de PJ Bristeau, Techniques d'estimation du déplacement d'un véhicule sans GPS et autres exemples de conception de systèmes de navigation MEMS (2012).).
- Les déformations des pneus peuvent être modélisées (voir documents US 2012/0022780 ou US4788645) pour être intégrés au calcul.

*Estimation du mouvement*

Comme expliqué, le procédé comprend avantageusement une étape (d) d'estimation par les moyens de traitement de données 21 du mouvement dudit véhicule 1 en fonction de la vitesse angulaire mesurée du véhicule 1 et/ou les valeurs mesurées de ladite au moins une grandeur représentative de la vitesse angulaire du véhicule 1 (les vitesses mesurées desdites roues 10a, 10b), et des valeurs des paramètres de calibration, mis à jour ou non selon le résultat de l'étape (c), i.e. après recalibration effective le cas échéant. L'étape (d) peut être mis en oeuvre de façon continue.

Par estimation du mouvement, on entend en particulier au moins l'estimation d'une orientation du véhicule 1 (dans le plan horizontal, i.e. un cap, à noter qu'on peut supposer que le plan horizontal du véhicule coïncide sensiblement avec le plan horizontal terrestre, ou du moins que l'homme du métier saura détecter et corriger un éventuel écart entre ces deux plans) et avantageusement l'estimation d'une norme de vitesse. L'orientation s'obtient typiquement par intégration de la vitesse angulaire.

De façon préférée, l'estimation par les moyens de traitement de données 21 du cap dudit véhicule 1 est uniquement faite en fonction de la vitesse angulaire mesurée du véhicule 1 et des valeurs des paramètres de calibration. En résumé, on utilise les informations d'un autre type (odométriques) pour calibrer le gyromètre 11, et ensuite on n'utilise pour l'estimation du cap que les informations gyrométriques (puisque celles-ci sont toujours disponibles y compris à faible vitesse et sur sol non plan). Le cas échéant, les vitesses mesurées desdites roues 10a, 10b (i.e. les données odométriques) ne sont utilisées dans l'étape (d) que pour déterminer une vitesse globale du véhicule 1, en particulier en faisant leur moyenne.

L'étape (d) peut en outre comprendre le calcul en fonction dudit paramètre représentatif d'une erreur sur les paramètres de calibration d'une erreur gyrométrique en orientation (cap). Par exemple, l'erreur en cap accumulée pendant une période après une calibration peut être estimée par l'incertitude dans l'estimation du biais multipliée avec durée de cette période.

A noter que dans un cas de véhicule autonome, l'étape (d) peut comprendre la génération d'une commande dudit véhicule 1 en fonction du mouvement estimé, de sorte à amener le véhicule 1 par exemple jusqu'à une destination souhaitée, ou à stopper le véhicule 1 en le gardant dans une trajectoire dénuée d'obstacles.

*Equipements et véhicule*

Selon un deuxième aspect, l'invention concerne un véhicule 1 à roues, comprenant :

- un gyromètre 11 configuré pour acquérir une vitesse angulaire mesurée du véhicule 1 ;
- des premiers moyens de mesure 20 d'au moins une grandeur représentative de la vitesse angulaire du véhicule 1, de valeurs mesurées de ladite au moins une grandeur représentative de la vitesse angulaire du véhicule 1, i.e. un capteur angulaire de volant ou des odomètres 20a, 20b équipant au moins deux des roues et configurés pour acquérir des vitesses mesurées desdites deux roues 10a, 10b ;
- des deuxièmes moyens de mesure comme un capteur angulaire du volant ou un récepteur GNSS ;
- des moyens de traitement de données 21 configurés pour déterminer des valeurs d'au moins un paramètre de calibration du gyromètre 11 minimisant un écart entre une première deuxième vitesse angulaire estimée du véhicule 1 et une deuxième vitesse angulaire estimée du véhicule 1,

  ◦ la première vitesse angulaire estimée du véhicule 1 étant fonction de la vitesse angulaire mesurée et de paramètres de calibration du gyromètre 11, et
  ◦ la deuxième vitesse angulaire estimée du véhicule 1 étant fonction des valeurs mesurées de ladite au moins une grandeur représentative de la vitesse angulaire du véhicule 1 (préférentiellement en fonction des vitesses mesurées des roues 10a, 10b et de paramètres de calibration des odomètres 20a, 20b).

Comme expliqué précédemment, le véhicule 1 peut en outre comprendre une mémoire 22 et une interface 23.

Par ailleurs, les moyens de traitement de données 21 sont configurés pour estimer un paramètre représentatif d'une erreur sur les paramètres de calibration, et peuvent être en outre configurés pour estimer un mouvement dudit véhicule 1 en fonction de la vitesse angulaire mesurée du véhicule 1 et/ou des vitesses mesurées desdites roues 10a, 10b (le cas échéant selon le résultat d'une comparaison dudit paramètre représentatif d'une erreur avec un seuil), et des valeurs des paramètres de calibration.

*Produit programme d'ordinateur*

Selon un troisième et un quatrième aspect, l'invention concerne un produit programme d'ordinateur comprenant des instructions de code pour l'exécution (sur les moyens de traitement 21) d'un procédé de calibration d'un gyromètre 11 selon le premier aspect de l'invention, ainsi que des moyens de stockage lisibles par un équipement informatique (par exemple des moyens de stockage de données 22) sur lequel on trouve ce produit programme d'ordinateur.

**Revendications**

1. Procédé de calibration d'un gyromètre (11) équipant un véhicule (1), le procédé étant **caractérisé en ce qu'**il comprend des étapes de :

    (a) Acquisition

       - par le gyromètre (11), d'une vitesse angulaire mesurée du véhicule (1),
       - par des premiers moyens de mesure (20) d'au moins une première grandeur représentative de la vitesse angulaire du véhicule (1), de valeurs mesurées de ladite au moins une première grandeur représentative de la vitesse angulaire du véhicule (1), et
       - par des deuxièmes moyens de mesure d'au moins une deuxième grandeur représentative de la vitesse angulaire du véhicule (1), différente de ladite au moins une première grandeur représentative de la vitesse angulaire du véhicule (1), de valeurs mesurées de ladite au moins une deuxième grandeur représentative de la vitesse angulaire du véhicule (1) ;

    (b) Détermination par des moyens de traitement de données (21) de valeurs d'au moins un paramètre de calibration du gyromètre (11) minimisant un écart entre une première vitesse angulaire estimée du véhicule (1) et une deuxième vitesse angulaire estimée du véhicule (1),

       - la première vitesse angulaire estimée du véhicule (1) étant fonction de la vitesse angulaire mesurée et de paramètres de calibration du gyromètre (11), et
       - la deuxième vitesse angulaire estimée du véhicule (1) étant fonction des valeurs mesurées de ladite au moins une première grandeur représentative de la vitesse angulaire du véhicule (1) ;

    (c) Estimation d'un paramètre représentatif d'une erreur sur le ou les paramètres de calibration, et, si ledit paramètre représentatif d'une erreur sur le ou les paramètres de calibration est inférieur à un seuil prédéterminé, calibration effective du gyromètre (11) et le cas échéant des moyens de mesure (20) d'au moins une première grandeur représentative de la vitesse angulaire du véhicule (1), en fonction des valeurs déterminées des paramètres de calibration, et, si ledit paramètre représentatif d'une erreur sur le ou les paramètres de calibration est supérieur audit seuil prédéterminé, les valeurs déterminées du ou des paramètres de calibration ne sont pas acceptées,
    le paramètre représentatif d'une erreur sur le ou les paramètres de calibration résultant d'une comparaison entre la deuxième vitesse angulaire estimée et une vitesse angulaire de référence du véhicule (1) fonction des valeurs mesurées de ladite au moins une deuxième grandeur représentative de la vitesse angulaire du véhicule (1).

2. Procédé selon la revendication 1, dans laquelle la première vitesse angulaire estimée $\omega_{gyro}^{(estimation)}$ du véhicule (1) est liée à la vitesse angulaire mesurée $\omega_{gyro}^{(mesure)}$ par un modèle $\omega_{gyro}^{(estimation)} = D \cdot (\omega_{gyro}^{(mesure)} + b)$, où D et b sont les paramètres de calibration du gyromètre (11).

3. Procédé selon l'une des revendications 1 et 2, dans lequel l'étape (b) comprend la mise en oeuvre d'un filtre récursif ou d'une optimisation.

4. Procédé selon l'une des revendications 1 à 3, dans lequel les premiers moyens de mesure (20) consistent soit en au moins deux odomètres (20a, 20b), soit en un capteur d'angle de volant.

5. Procédé selon la revendication 4, dans lequel les premiers moyens de mesure (20) consistent en au moins deux odomètres (20a, 20b), le véhicule (1) présentant au moins deux roues (10a, 10b) munies d'odomètres (20a, 20b), lesdites premières grandeurs représentatives de la vitesse angulaire du véhicule (1) étant les vitesses desdites roues (10a, 10b), et ladite deuxième vitesse angulaire estimée du véhicule (1) étant fonction des vitesses mesurées des roues (10a, 10b) et de paramètres de calibration des odomètres (20a, 20b)

6. Procédé selon la revendication 5, dans lequel l'étape (b) comprend également la détermination de valeurs d'au moins un paramètre de calibration des odomètres (20a, 20b).

7. Procédé selon l'une des revendications 5 et 6, dans lequel lesdites au moins deux roues munies d'odomètres (20a, 20b) sont deux roues arrière (10a, 10b) du véhicule (1), la deuxième vitesse angulaire estimée $\omega_{odo}^{(estimation)}$ du véhicule (1) étant liée aux vitesses mesurées $v_L$, $v_R$ respectivement pour la roue arrière gauche (10a) et la roue arrière droite (10b) par la formule $\omega_{odo}^{(estimation)} = \dfrac{\alpha_R v_R - \alpha_L v_L}{d}$, où $\alpha_R$, $\alpha_L$ et d sont les paramètres de calibration des odomètres (20a, 20b).

8. Procédé selon les revendications 2, 6 et 7 en combinaison, dans lequel les paramètres de calibration $D$ et $d$ sont prédéterminés, l'étape (b) comprenant la détermination des paramètres de calibration $b$, $\alpha_R$ et $\alpha_L$.

9. Procédé selon l'une des revendications 5 à 8, dans lequel l'étape (b) comprend la minimisation de $\left| \omega_{odo}^{(estimation)} - \omega_{gyro}^{(estimation)} \right|$.

10. Procédé selon l'une des revendication 5 à 9, comprenant une étape (d) d'estimation par les moyens de traitement de données (21) du mouvement dudit véhicule (1) en fonction de la vitesse angulaire mesurée du véhicule (1) et/ou des vitesses mesurées desdites roues (10a, 10b), et des valeurs des paramètres de calibration, dans lequel une orientation du véhicule (1) est estimée à l'étape (d) uniquement en fonction de la vitesse angulaire mesurée du véhicule (1) et des valeurs des paramètres de calibration, et les vitesses mesurées desdites roues (10a, 10b) sont utilisées pour estimer une vitesse globale du véhicule (1).

11. Véhicule (1) à roues, comprenant un gyromètre (11) configuré pour acquérir une vitesse angulaire mesurée du véhicule (1), des premiers moyens de mesure (20) d'au moins une première grandeur représentative de la vitesse angulaire du véhicule (1) et configurés pour acquérir des valeurs mesurées de ladite au moins première une grandeur représentative de la vitesse angulaire du véhicule (1), et des deuxièmes moyens de mesure d'au moins une deuxième grandeur représentative de la vitesse angulaire du véhicule (1), différente de ladite au moins une première grandeur représentative de la vitesse angulaire du véhicule (1), configurés pour acquérir des valeurs mesurées de ladite au moins une deuxième grandeur représentative de la vitesse angulaire du véhicule (1), le véhicule (1) étant **caractérisé en ce qu'**il comprend en outre des moyens de traitement de données (21) configurés pour déterminer des valeurs d'au moins un paramètre de calibration du gyromètre (11) minimisant un écart entre une première deuxième vitesse angulaire estimée du véhicule (1) et une deuxième vitesse angulaire estimée du véhicule (1),

- la première vitesse angulaire estimée du véhicule (1) étant fonction de la vitesse angulaire mesurée et de paramètres de calibration du gyromètre (11), et
- la deuxième vitesse angulaire estimée du véhicule (1) étant fonction des valeurs mesurées de ladite au moins une première grandeur représentative de la vitesse angulaire du véhicule (1) ;

les moyens de traitement de données (21) étant en outre configurés pour estimer un paramètre représentatif d'une erreur sur le ou les paramètres de calibration, et, si ledit paramètre représentatif d'une erreur sur le ou les paramètres de calibration est inférieur à un seuil prédéterminé, calibrer le gyromètre (11) et le cas échéant des moyens de mesure (20) d'au moins une première grandeur représentative de la vitesse angulaire du véhicule (1), en fonction des valeurs déterminées des paramètres de calibration, et, si ledit paramètre représentatif d'une erreur sur les ou les paramètres de calibration est supérieur audit seuil prédéterminé, les valeurs déterminées du ou des paramètres de calibration ne sont pas acceptées,

le paramètre représentatif d'une erreur sur le ou les paramètres de calibration résultant d'une comparaison entre la deuxième vitesse angulaire estimée et une vitesse angulaire de référence du véhicule (1) fonction des valeurs mesurées de ladite au moins une deuxième grandeur représentative de la vitesse angulaire du véhicule (1).

12. Produit programme d'ordinateur comprenant des instructions de code pour l'exécution d'un procédé de calibration d'un gyromètre (11) selon l'une des revendications 1 à 10, lorsque ledit programme est exécuté sur un ordinateur.

13. Moyen de stockage lisible par un équipement informatique sur lequel un produit programme d'ordinateur comprend des instructions de code pour l'exécution d'un procédé de calibration d'un gyromètre (11) selon l'une des revendications 1 à 10.

**Patentansprüche**

1. Verfahren zur Kalibrierung eines in einem Fahrzeug (1) eingebauten Gyrometers (11), wobei das Verfahren **dadurch gekennzeichnet ist, dass** es die folgenden Schritte umfasst:

   (a) Erfassen

      - durch das Gyrometer (11) einer gemessenen Winkelgeschwindigkeit des Fahrzeugs (1),
      - durch erste Messmittel (20) mindestens einer ersten für die Winkelgeschwindigkeit des Fahrzeugs (1) repräsentativen Größe, von gemessenen Werten der mindestens einen ersten für die Winkelgeschwindigkeit des Fahrzeugs (1) repräsentativen ersten Größe;
      - durch zweite Messmittel mindestens einer zweiten für die Winkelgeschwindigkeit des Fahrzeugs (1) repräsentativen Größe, die von der mindestens einen ersten für die Winkelgeschwindigkeit des Fahrzeugs (1) repräsentativen Größe unterschiedlich ist, von gemessenen Werten der mindestens einen zweiten für die Winkelgeschwindigkeit des Fahrzeugs (1) repräsentativen zweiten Größe;

   (b) Bestimmen, durch Datenverarbeitungsmittel (21) von Werten mindestens eines Kalibrierungsparameters des Gyrometers (11), die eine Abweichung zwischen einer ersten geschätzten Winkelgeschwindigkeit des Fahrzeugs (1) und einer zweiten geschätzten Winkelgeschwindigkeit des Fahrzeugs (1) minimiert,

      - wobei die erste geschätzte Winkelgeschwindigkeit des Fahrzeugs (1) Funktion der gemessenen Winkelgeschwindigkeit und von Kalibrierungsparametern des Gyrometers (11) ist, und
      - wobei die zweite geschätzte Winkelgeschwindigkeit des Fahrzeugs (1) Funktion der gemessenen Werte der mindestens einen ersten für die Winkelgeschwindigkeit des Fahrzeugs (1) repräsentativen Größe ist;

   (c) Schätzen eines Parameters, der für einen Fehler in dem oder den Kalibrierungsparametern repräsentativ ist, und, wenn der Parameter, der für einen Fahler in dem oder den Kalibrierungsparametern repräsentativ ist, kleiner als ein vorbestimmter Schwellenwert ist, tatsächliche Kalibrierung des Gyrometers (11) und gegebenenfalls der Messmittel (20) mindestens einer ersten für die Winkelgeschwindigkeit des Fahrzeugs (1) repräsentativen Größe, in Abhängigkeit von den bestimmten Werten der Kalibrierungsparameter, und, wenn der Parameter, der für einen Fehler in dem oder den Kalibrierungsparametern repräsentativ ist, größer als der vorbestimmte Schwellenwert ist, die bestimmten Werte des oder der Kalibrierungsparameter nicht akzeptiert sind,
   wobei der Parameter, der für einen Fehler in dem oder den Kalibrierungsparametern repräsentativ ist, aus einem Vergleich zwischen der zweiten geschätzten Winkelgeschwindigkeit und einer Referenzwinkelgeschwindigkeit des Fahrzeugs (1), die abhängig der gemessenen Werte der mindestens einen zweiten für die Winkelgeschwindigkeit des Fahrzeugs (1) repräsentativen Größe ist, resultiert.

2. Verfahren nach Anspruch 1, wobei die erste geschätzte Winkelgeschwindigkeit $\omega_{gyro}^{(estimation)}$ des Fahrzeugs (1) mit der gemessenen Winkelgeschwindigkeit $\omega_{gyro}^{(mesure)}$ durch ein Modell $\omega_{gyro}^{(estimation)} = D \cdot (\omega_{gyro}^{(mesure)} + b)$ verbunden ist, wobei $D$ und $b$ die Kalibrierungsparameter des Gyrometers (11) sind.

3. Verfahren nach einem der Ansprüche 1 und 2, wobei der Schritt (b) die Implementierung eines rekursiven Filters oder einer Optimierung umfasst.

4. Verfahren nach einem der Ansprüche 1 bis 3, wobei die ersten Messmittel (20) entweder aus mindestens zwei Wegmessern (20a, 20b) oder aus einem Lenkradwinkelsensor bestehen.

**5.** Verfahren nach Anspruch 4, wobei die ersten Messmittel (20) aus mindestens zwei Wegmessern (20a, 20b) bestehen, wobei das Fahrzeug (1) mindestens zwei Räder (10a, 10b) aufweist, die mit Wegmessern (20a, 20b) versehen sind, wobei die ersten für die Winkelgeschwindigkeit des Fahrzeugs (1) repräsentativen Größen die Geschwindigkeiten der Räder (10a, 10b) sind und die zweite geschätzte Winkelgeschwindigkeit des Fahrzeugs (1) abhängig der gemessenen Geschwindigkeiten der Räder (10a, 10b) und von Kalibrierungsparametern der Wegmesser (20a, 20b) ist.

**6.** Verfahren nach Anspruch 5, wobei der Schritt (b) ebenfalls die Bestimmung von Werten von mindestens einem Kalibrierungsparameter der Wegmesser (20a, 20b) umfasst.

**7.** Verfahren nach einem der Ansprüche 5 und 6, wobei die mindestens zwei mit Wegmessern versehenen Räder (20a, 20b) zwei Hinterräder (10a, 10b) des Fahrzeugs (1) sind, wobei die zweite geschätzte Winkelgeschwindigkeit $\omega_{odo}^{(estimation)}$ des Fahrzeugs (1) mit den gemessenen Geschwindigkeiten $v_L$, $v_R$ jeweils für das linke Hinterrad (10a) und das rechte Hinterrad (10b) durch die Formel $\omega_{odo}^{(estimation)} = \frac{\alpha_R v_R - \alpha_L v_L}{d}$ verbunden sind, wobei $\alpha_R$, $\alpha_L$ und d die Kalibrierungsparameter der Wegmesser (20a, 20b) sind.

**8.** Verfahren nach den Ansprüchen 2, 6 und 7 in Kombination, wobei die Kalibrierungsparameter D und d vorbestimmt sind, wobei der Schritt (b) das Bestimmen der Kalibrierungsparameter $b$, $\alpha_R$ und $\alpha_L$ umfasst.

**9.** Verfahren nach einem der Ansprüche 5 bis 8, wobei der Schritt (b) die Minimierung von $\left| \omega_{odo}^{(estimation)} - \omega_{gyro}^{(estimation)} \right|$ umfasst.

**10.** Verfahren nach einem der Ansprüche 5 bis 9, umfassend einen Schritt (d) des Schätzens der Bewegung des Fahrzeugs (1) durch die Datenverarbeitungsmittel (21) in Abhängigkeit von der gemessenen Winkelgeschwindigkeit des Fahrzeugs (1) und/oder den gemessenen Geschwindigkeiten der Räder (10a, 10b) und den Werten der Kalibrierungsparameter, wobei eine Ausrichtung des Fahrzeugs (1) in Schritt (d) nur in Abhängigkeit von der gemessenen Winkelgeschwindigkeit des Fahrzeugs (1) und der Werte der Kalibrierungsparameter geschätzt wird, und die gemessenen Geschwindigkeiten der Räder (10a, 10b) verwendet werden, um eine Gesamtgeschwindigkeit des Fahrzeugs (1) zu schätzen.

**11.** Fahrzeug (1) mit Rädern, umfassend ein Gyrometer (11), das ausgelegt ist, um eine gemessene Winkelgeschwindigkeit des Fahrzeugs (1) zu erfassen, erste Messmittel (20) mindestens einer ersten für die Winkelgeschwindigkeit des Fahrzeugs (1) repräsentativen Größe die ausgelegt sind, um Messwerte der mindestens einen ersten für die Winkelgeschwindigkeit des Fahrzeugs (1) repräsentativen Größe zu erfassen, und zweite Messmittel mindestens einer zweiten für die Winkelgeschwindigkeit des Fahrzeugs (1) repräsentativen Größe, die sich von der mindestens einen ersten für die Winkelgeschwindigkeit des Fahrzeugs (1) repräsentativen Größe unterscheidet, die ausgelegt sind, um Messwerte der mindestens einen zweiten für die Winkelgeschwindigkeit des Fahrzeugs (1) repräsentativen Größe zu erfassen, wobei das Fahrzeug (1) **dadurch gekennzeichnet ist, dass** es ferner Datenverarbeitungsmittel (21) umfasst, die ausgelegt sind, um Werte von mindestens einem Kalibrierungsparameter des Gyrometers (11) zu bestimmen, die eine Abweichung zwischen einer ersten zweiten geschätzten Winkelgeschwindigkeit des Fahrzeugs (1) und einer zweiten geschätzten Winkelgeschwindigkeit des Fahrzeugs (1) minimieren,

- wobei die erste geschätzte Winkelgeschwindigkeit des Fahrzeugs (1) eine Funktion der gemessenen Winkelgeschwindigkeit und von Kalibrierungsparametern des Gyrometers (11) ist, und
- wobei die zweite geschätzte Winkelgeschwindigkeit des Fahrzeugs (1) eine Funktion der gemessenen Werte der mindestens einen ersten für die Winkelgeschwindigkeit des Fahrzeugs (1) repräsentativen Größe ist;
wobei die Datenverarbeitungsmittel (21) ferner ausgelegt sind, um einen Parameter zu schätzen, der für einen Fehler in dem oder den Kalibrierungsparametern repräsentativ ist, und, wenn der Parameter, der für einen Fehler in dem oder den Kalibrierungsparametern repräsentativ ist, kleiner als ein vorbestimmter Schwellenwert ist, das Gyrometer (11) und gegebenenfalls die Messmittel (20) mindestens einer ersten für die Winkelgeschwindigkeit des Fahrzeugs (1) repräsentativen Größe in Abhängigkeit von den bestimmten Werten der Kalibrierungsparameter zu kalibrieren, und, wenn der Parameter, der für einen Fehler in dem oder den Kalibrierungsparametern repräsentativ ist, größer als der vorbestimmte Schwellenwert ist, die bestimmten Werte des oder der Kalibrierungsparameter nicht zu akzeptieren, wobei der Parameter, der für einen Fehler in dem oder den Kalibrierungsparametern repräsentativ ist, aus einem Vergleich zwischen der zweiten geschätzten Winkelgeschwindigkeit und einer Referenzwinkelgeschwindigkeit des Fahrzeugs (1), die abhängig der gemessenen Werte der mindestens einen zweiten für die Winkelgeschwindigkeit des Fahrzeugs (1) repräsentativen Größe ist, resultiert.

**12.** Rechnerprogrammprodukt, das Codebefehle für die Ausführung eines Verfahrens zur Kalibrierung eines Gyrometers (11) nach einem der Ansprüche 1 bis 10 umfasst, wenn das Programm auf einem Rechner ausgeführt wird.

**13.** Speichermedium, das von einer IT-Ausrüstung lesbar ist, auf dem ein Rechnerprogrammprodukt Codebefehle für die Ausführung eines Verfahrens zur Kalibrierung eines Gyrometers (11) nach einem der Ansprüche 1 bis 10 umfasst.

**Claims**

**1.** Method for calibrating a gyrometer (11) equipping a vehicle (1), the method being **characterised in that** it comprises the steps of:

(a) Acquisition

- by the gyrometer (11), of a measured angular velocity of the vehicle (1), and
- by first means (20) for measuring at least one first quantity representative of the angular velocity of the vehicle (1), of measured values of said at least one first quantity representative of the angular velocity of the vehicle (1);
- by second means for measuring at least one second quantity representative of the angular velocity of the vehicle (1), different from said at least one first quantity representative of the angular velocity of the vehicle (1) of measured values of said at least one second quantity representative of the angular velocity of the vehicle (1);

(b) Determination by data processing means (21) of values of at least one parameter for calibrating the gyrometer (11) minimising a difference between a first estimated angular velocity of the vehicle (1) and a second estimated angular velocity of the vehicle (1),

- the first estimated angular velocity of the vehicle (1) being a function of the measured angular velocity and parameters for calibrating the gyrometer (11), and
- the second estimated angular velocity of the vehicle (1) being a function of the measured values of said at least one first quantity representative of the angular velocity of the vehicle (1);

(c) Estimation of a parameter representative of an error on the calibration parameter(s) and, if said parameter representative of an error on the calibration parameter(s) is below a predetermined threshold, the actual calibration of the gyrometer (11) and if appropriate of the means (20) for measuring at least one first quantity representative of the angular velocity of the vehicle (1), as a function of the determined values of the calibration parameters and, if said parameter representative of an error on the calibration parameter(s) is above said predetermined threshold, the determined values of the calibration parameter(s) are not accepted, the parameter representative of an error on the calibration parameter(s) resulting from a comparison between the second estimated angular velocity and a reference angular velocity of the vehicle (1) depending on the measured values of said at least one second quantity representative of the angular velocity of the vehicle (1).

**2.** Method according to claim 1, wherein the first estimated angular velocity $\omega_{gyro}^{(estimation)}$ of the vehicle (1) is linked to the angular velocity $\omega_{gyro}^{(measured)}$ measured by a model $\omega_{gyro}^{(estimation)} = D \cdot (\omega_{gyro}^{(measured)} + b)$, where $D$ and $b$ are the parameters for calibrating the gyrometer (11).

**3.** Method according to one of claims 1 and 2, wherein step (b) comprises the implementation of a recursive filter or an optimisation.

**4.** Method according to one of claims 1 to 3, wherein the first measuring means (20) consist either in at least two odometers (20a, 20b), or in a steering wheel angle sensor.

**5.** Method according to claim 4, wherein the first measuring means (20) consist in at least two odometers (20a, 20b), the vehicle (1) having at least two wheels (10a, 10b) provided with odometers (20a, 20b), said first quantities representative of the angular velocity of the vehicle (1) being the velocities of said wheels (10a, 10b), and said second estimated angular velocity of the vehicle (1) being a function of the measured velocities of the wheels (10a, 10b) and parameters for calibrating the odometers (20a, 20b)

**6.** Method according to claim 5, wherein step (b) also comprises the determination of values of at least one parameter for calibrating the odometers (20a, 20b).

**7.** Method according to one of claims 5 and 6, wherein said at least two wheels provided with odometers (20a, 20b) are two rear wheels (10a, 10b) of the vehicle (1), the second estimated angular velocity $\omega_{odo}^{(estimation)}$ of the vehicle (1) being linked to the measured velocities $v_L$, $v_R$ respectively for the left rear wheel (10a) and the right rear wheel (10b) by the formula $\omega_{odo}^{(estimation)} = \dfrac{\alpha_R v_R - \alpha_L v_L}{d}$, where $\alpha_R$, $\alpha_L$ and d are the parameters for calibrating the odometers (20a, 20b).

**8.** Method according to claims 2, 6 and 7 in combination, wherein the calibration parameters $D$ and $d$ are predetermined, step (b) comprising the determination of the calibration parameters $b$, $\alpha_R$ and $\alpha_L$.

**9.** Method according to one of claims 5 to 8, wherein step (b) comprises the minimisation of $\left| \omega_{odo}^{(estimation)} - \omega_{gyro}^{(estimation)} \right|$.

**10.** Method according to one of claims 5 to 9, comprising a step (d) of estimation by the data processing means (21) of the movement of said vehicle (1) as a function of the measured angular velocity of the vehicle (1) and/or the measured velocities of said wheels (10a, 10b), and calibration parameter values, wherein an orientation of the vehicle (1) is estimated at step (d) uniquely as a function of the measured angular velocity of the vehicle (1) and the calibration parameter values, and the measured velocities of said wheels (10a, 10b) are used to estimate an overall velocity of the vehicle (1).

**11.** Wheeled vehicle (1), comprising a gyrometer (11) configured to acquire a measured angular velocity of the vehicle (1), first means (20) for measuring at least one first quantity representative of the angular velocity of the vehicle (1) and configured to acquire measured values of said at least one first quantity representative of the angular velocity of the vehicle (1), and second means (20) for measuring at least one second quantity representative of the angular velocity of the vehicle (1), different from said at least one first quantity representative of the angular velocity of the vehicle (1), configured to acquire measured values of said at least one second quantity representative of the angular velocity of the vehicle (1), the vehicle (1) being **characterised in that** it further comprises data processing means (21) configured to determine values of at least one parameter for calibrating the gyrometer (11) minimising a difference between a first second estimated angular velocity of the vehicle (1) and a second estimated angular velocity of the vehicle (1),

  - the first estimated angular velocity of the vehicle (1) being a function of the measured angular velocity and parameters for calibrating the gyrometer (11), and
  - the second estimated angular velocity of the vehicle (1) being a function of the measured values of said at least one first quantity representative of the angular velocity of the vehicle (1);
  the data processing means (21) being further configured to estimate a parameter representative of an error on the calibration parameter(s) and, if said parameter representative of an error on the calibration parameter(s) is below a predetermined threshold, calibrate the gyrometer (11) and if appropriate the means (20) for measuring at least one first quantity representative of the angular velocity of the vehicle (1), as a function of the determined values of the calibration parameters and, if said parameter representative of an error on the calibration parameter(s) is above said predetermined threshold, the determined values of the calibration parameter(s) are not accepted,
  the parameter representative of an error on the calibration parameter(s) resulting from a comparison between the second estimated angular velocity and a reference angular velocity of the vehicle (1) depending on the measured values of said at least one second quantity representative of the angular velocity of the vehicle (1).

**12.** Computer programme product comprising code instructions for the execution of a method for calibrating a gyrometer (11) according to one of claims 1 to 10, when said programme is executed on a computer.

**13.** Storage means readable by a computer equipment on which a computer programme product comprises code instructions for the execution of a method for calibrating a gyrometer (11) according to one of claims 1 to 10.

FIG. 1

**FIG. 2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8965691 B
- US 20120022780 A
- US 20090265054 A
- EP 1094299 A
- FR 2939514
- US 4788645 A

**Littérature non-brevet citée dans la description**

- **PJ BRISTEAU.** *Techniques d'estimation du déplacement d'un véhicule sans GPS et autres exemples de conception de systèmes de navigation MEMS,* 2012